Europäisches Patentamt

European Patent Office

Office européen des brevets

(11) Publication number: **0 456 913 A1**

## EUROPEAN PATENT APPLICATION

(21) Application number: 90201218.6

(22) Date of filing: 15.05.90

(51) Int. Cl.5: **B07B 4/02**, B07B 11/04, B07B 9/00

The title of the invention has been amended (Guidelines for Examination in the EPO, A-III, 7.3).

(43) Date of publication of application:
**21.11.91 Bulletin 91/47**

(84) Designated Contracting States:
**AT BE CH DE DK FR GB IT LI LU NL SE**

(71) Applicant: **DUOS ENGINEERING BV**
**Kennemerhof 6, Postbus 561**
**NL-1940 AN Beverwijk(NL)**

(72) Inventor: **Duijn, C.G.S.**
**Zuilenburg 13**
**NL-1965 NV Heemskerk(NL)**

(54) **Suction-sifter.**

(57) An installation transports a mixture of material before the inlet of a suction mouth. The suction mouth is adjustable in all directions and by using the adjustable units mounted on the suction duct (1) it is possible to variate the height of the mouth above the transported mixture of materials which has to be treated. The width of the opening of the suction mouth is adjustable in a way that the shape of the mouth required is whether symmetrical or asymmetrical. The suction power at the inlet of the suction mouth is regulated by adjusting the width of opening of the suction mouth combined with air supply using an air inlet valve (3) placed upon the suction duct. The exhausted air is to be let into a cyclone (5) in which the materials which are sucked up and transported with the air have to deposit. The behaviour and velocity of flow of the air led into the cyclone (5) are adjustable by using the air inlet valve (3). The suction power is provided by a fan (8) (exhauster) connected at the outlet pipe (7) of the cyclone (5). Finally the air exhausted with the fan (8) is blown through a dust filter (9).

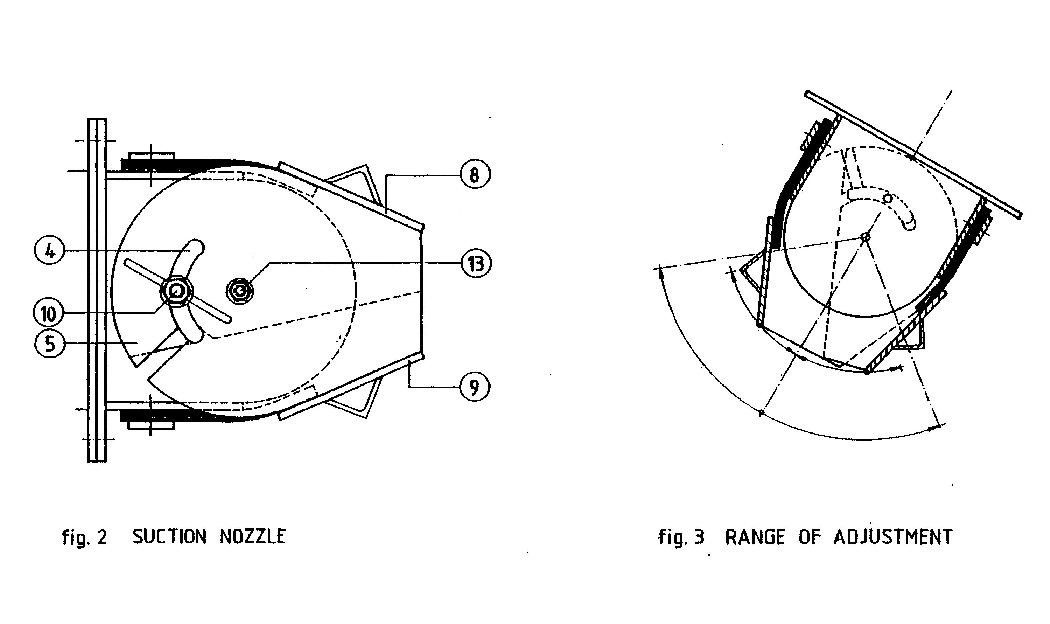

fig. 2 SUCTION NOZZLE

The invention concerns an installation with the purpose to separate materials using suction air power lead through an adjustable suction mouth (nozzle), in particular separation of materialparts with different specific mass or otherwise materialparts with different sizes. The invention relates to seperation of crushed stone, rubbish, different kinds of metal (for example to be used after the shredding of cars), glass, compost and paper. The position of the suction mouth is adjustable in all directions as well as the width of opening of the suction mouth. The suction power at the inlet of the nozzle is also adjustable.

Installations ment for separation of materials using adjustable suction power are already discribed. We refer to installations shown in the Dutch patent specifications 8701807 and 7604097. With the installations mentioned above, the suction power is regulated by using an adjustable valve placed inside the suction duct. This method suffers from the disadvantage that the behaviour and velocity of the airflow lead through a cyclone have a bad influence on the operation of the cycloon. With our installation exhausted air containing materials is lead through a cyclone to deposit those materials. Regulations of airvelocity in pipes supplying air using airinlet valves are also known. The disadvantage of such a regulation is the adjustment of suction power which is only possible at the inlet of the suction mouth.

For the best results of separating the materials it is necessary to combine the adjustment of suction power and the adjustment of the width and position of the suction mouth.

The purpose of the invention is to create an installation which is suited to separate both as many as possible different kinds of material as well as different kinds of materialparts. This can be obtained by making a combination between the adjustment of suction power and the position and width of the suction mouth. Therefore it is necessary that the state of the exhausted air (behaviour and velocity) makes it possible for the parts of material exhausted to deposit in a cyclone.

The installation consists of: a feeding conveyor belt which eventually pours out on a vibrating feeder or a vibrating screen. A suction mouth (nozzle) is placed above the point of discharge of the conveyor belt or otherwise if used the point of discharge of the vibrating machine. The width of the opening of the suction mouth is adjustable. The position of the suction mouth is adjustable in all directions and it is possible to variate the height of the suction mouth above the pouring mixture of the materials. The heavier or the bigger parts of material will pass the edge of the conveyor belt or vibrating machine and fall down. These parts can be collected. The lighter or the smaller parts will be sucked up. The suction power is provided by a fan (exhauster) which is placed behind the cyclone.

By regulating the width of opening of the suction mouth and using an air inlet valve to supply air in the suction duct it is possible, in the first place to regulate the suction power at the inlet side of the suction mouth and in the second place to adjust the air behaviour and velocity in the suction duct which leads to the cyclone. Then the exhausted materials are lead through the cyclone where the materials are to be deposited. The deposited materials can be discharged from the cyclone by means of a rotery valve. The air exhausted with the fan is finally blown through a dust filter. The collected dust inside the filter can be discharged using a conveyor screw.

Figure 1 shows the complete installation.

Figure 2 shows the construction of the adjustable suction mouth.

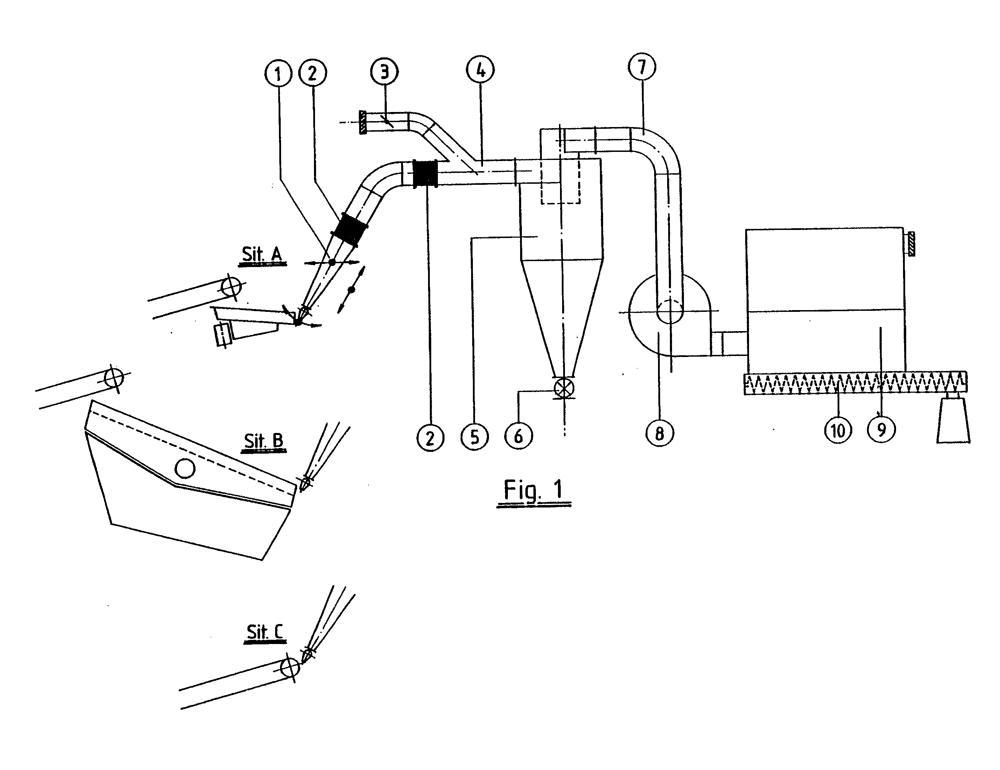

The mixture of materials which has to be separated are feeded by a conveyor belt. The best result of seperation of the different fractions of the mixture will be obtained, if the feeded materials are well spread before treatment. Therefore it is necessary to spread the parts of material in front of the inlet of the suction mouth using a vibrating feeder or vibrating screen. (figure 1 alternative A and B). However it is also possible to feed the materials using a flat conveyor belt (alternative C). The mixture of materials pours out over the edge of the vibrating machine or conveyor belt. The heavier or the bigger parts of material will fall down, while the lighter or the smaller parts are suct up by the suction mouth.

The opening of the suction mouth (figure 2) is made of two separate stripes (8 and 9). A plate, with a round form fitted with a curved slot, is welded at both ends of each stripe (4 and 5). This construction is mounted in a framework. By means of bolt 10 the width of opening can be changed, characterised in that it is possible to move both stripes separately in relation to each other . With this possibility the suction mouth can be adjusted and fixed in a symmetric or a asymmetric shape as provided. By means of bolt 13 it is possible to change the position of the complete suction mouth (nozzle), and this makes it possible to place the suction mouth in any direction and position above the pouring mixture of materials (figure 3). Then the distance between the suction mouth and the pouring mixture of materials is also important (figure 1), and can be adjusted in a horizontal as well as in a vertical way by using the adjustment units mounted on the suction pipe (number 1). The suction power at the inlet of the suction mouth is regulated in a way that all desired parts of material are sucked up, in one way by adjusting the width of opening of the suction mouth and in the other way by changing the suction power at the inlet of the suction mouth by supplying air using an air inlet valve (number 3). While it is not possible to change the capacity of the fan, the air inlet valve is applied. In the first place now it is possible to adjust the suction power at the inlet of the suction mouth combined with adjustment of the width of opening of the suction mouth.

In the second place it possible to regulate the velocity of air inside the exhausting pipe, which is necessary because the air exhausted containing parts of material together with the air supplied is lead through a cyclone (number 5). Qualifications (behaviour and velocity of flow) of the air lead into the cyclone influence the working of the cyclone and therefore stipulate the way in which the exhausted parts will deposit. The speed of the air lead into the cyclone can be adjusted in a way, that deposition of parts inside the cyclone will be optimal. The parts deposited inside the cyclone are discharged by a rotery valve mounted at the bottom of the cyclone (number 6). The air outlet of the cyclone is connected to the air inlet of the fan (number 8). The air exhausted by the fan is finally lead through a dust filter to comply with European requirements of emission of air. Dust collected with the dust filter can be discharged to a dust bag by means of a conveyor screw or belt.

## Claims

1. An installation with the purpose to separate materials using suction air lead through an adjustable suction mouth (nozzle), in particular separation of materialparts with different specific mass or otherwise materialparts with different sizes. The invention relates to seperation of crushed stone, rubbish, different kinds of metal (for example to be used after the shredding of cars), glass, compost and paper.

2. An installation with the purpose to separate materials using suction air according to claim 1 characterised in that the mixture of materials is feeded in front of the inlet of the suction mouth using a vibrating feeder or screen, or using a flat conveyor belt.

3. An installation with the purpose to separate materials using suction air according to claim 1 and 2 characterised in that the width of the opening of the suction mouth is adjustable. Also it is possible that the fixed shape of the mouth required is whether symmetrical or asymmetrical.

4. An installation with the purpose to separate materials using suction air according to claim 1 to 3 characterised in that the suction mouth is adjustable in all directions as well as the height of the inlet of the suction mouth above the mixture of materials which have to be separated.

5. An installation with the purpose to separate materials using suction air according to claim 1 to 4 characterised in that the velocity of air inside the suction duct is regulated by the supply of extra air using an air inlet valve.

6. An installation with the purpose to separate materials using suction air according to claim 1 to 5 characterised in that the air exhausted containing parts of material is lead through a cyclone in which the parts of material are to be deposited.

**Fig. 1**

Sit. A

Sit. B

Sit. C

fig. 3  RANGE OF ADJUSTMENT

fig. 2  SUCTION NOZZLE

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A | US-A-1 327 452 (WILLIAMS)<br>* the whole document * | 1-3,4,5 | B 07 B 4/02<br>B 07 B 11/04<br>B 07 B 9/00 |
| X,A | DE-B-1 168 223 (KALKER TRIEURFABRIK UND FABRIK & CIE.)<br>* column 3, line 6 - column 4, line 26; figures * | 1-3,5,6 | |
| X,A | DE-C-9 500 97 (ALEFELD ET AL)<br>* the whole document * | 1,2,4 | |
| A | DE-B-2 629 746 (ERKELENZER MASCHINENFABRIK FERD. CLASEN KG)<br>* column 2, line 60 - column 4, line 24; figures * | 1,2,6 | |
| D,A | NL-A-8 701 807 (ALOFS)<br>* page 2, line 37 - page 3, line 30; figure * | 1,2 | |
| A,D | US-A-4 148 719 (CERRONI)<br>* column 2, line 12 - column 3, line 20; figure & NL-A-7604097 * | 1,2,6 | |

TECHNICAL FIELDS
SEARCHED (Int. Cl.5)

B 07 B
B 65 G

The present search report has been drawn up for all claims

| Place of search | Date of completion of search | Examiner |
|---|---|---|
| The Hague | 14 January 91 | VAN DER ZEE W.T. |